# EUROPEAN PATENT SPECIFICATION

(11) **EP 3 211 703 B1**
(45) Date of publication and mention of the grant of the patent: **10.04.2019**
(21) Application number: 17158136.6
(22) Date of filing: 27.02.2017
(51) Int. Cl.: H01M 8/1246, H01M 4/90, H01M 8/0236, H01M 8/124

(54) **FUEL CELL**
BRENNSTOFFZELLE
PILE À COMBUSTIBLE

(30) Priority: 29.02.2016 JP 2016037201; 10.02.2017 JP 2017023514
(43) Date of publication of application: 30.08.2017
(73) Proprietor: AISIN SEIKI KABUSHIKI KAISHA, Aichi 448-8650 (JP)
(72) Inventor: KATO, Michiaki, Kariya-shi,, Aichi 448-8650 (JP); UKAI, Kenji, Kariya-shi,, Aichi 448-8650 (JP); OKADA, Koichi, Kariya-shi,, Aichi 448-8650 (JP); MIURA, Kazuhiro, Kariya-shi,, Aichi 448-8650 (JP); JAKOBSEN, Karsten Wedel, 2800 Kgs. Lyngby (DK); ROSSMEISL, Jan, 2800 Kgs. Lyngby (DK); BJØRKETUN, Mårten, 2800 Kgs. Lyngby (DK); CASTELLI, Ivano Eligio, 2800 Kgs. Lyngby (DK); OLSEN, Thomas, 2800 Kgs. Lyngby (DK)
(74) Representative: TBK

(56) References cited:
- JP-A- 2011 150 959
- YOUMIN GUO ET AL: "Effect of Sm content on the properties and electrochemical performance of SmSrCoO(0.20.8) as an oxygen reduction electrodes on doped ceria electrolytes", ELECTROCHIMICA ACTA, ELSEVIER SCIENCE PUBLISHERS, BARKING, GB, vol. 56, no. 7, 21 December 2010 (2010-12-21), pages 2870-2876, XP028177236, ISSN: 0013-4686, DOI: 10.1016/J.ELECTACTA.2010.12.075 [retrieved on 2010-12-30]

## Description

### Technical Field

The present invention pertains to a fuel cell.

### Background Art

In a solid oxide fuel cell, which is operated, for example, under the temperature of 600 to 800°C, a lanthanum strontium cobaltite system perovskite type oxide (La,Sr)CoO₃ hereinafter also referred to as LSC) and a lanthanum strontium cobalt ferrite (La,Sr)CoFeO₃, hereinafter also referred to as LSCF) are frequently used for a current collecting material. According to the Patent Literature 1 below, a fuel cell equipped with a so-called horizontal stripe fuel cell stack has been disclosed. In this fuel cell, a plurality of fuel cells is arranged on a flat hollow cylindrical porous support of the fuel cell stack, along in a longitudinal direction each being separated from one another with a predetermined distance like a row of scattered islands. The fuel cell module is structured to have a plurality of fuel cell stacks to be stacked by layering the stacks arranging each flat surface side thereof opposing to one another. Further, thus structured fuel cell module is accommodated in a predetermined housing to form a fuel cell. According to the Patent Literature 2 listed below, a cell of a fuel cell formed by layering a plurality of approximately rectangular shaped cell elements and a flat plate type fuel cell formed by layering a plurality of fuel cells are disclosed.

The mutually adjacently arranged cells of a fuel cell disclosed in the Patent Literature 1 are connected to each other through a current collecting body (interconnector) and a porous current collecting layer along in the longitudinal direction relative to the porous support. In more detail, one side of an anode layer of the fuel cell is electrically connected to the other side of a cathode layer of the fuel cell. The mutually adjacently arranged fuel cell stacks are connected to each other through a stack connecting member arranged at the one end side. In more detail, the stack connecting member is arranged to electrically connect the porous current collecting layer which is conducted to the one side of the cathode layer of the fuel cell stack with the porous current collecting layer which is conducted to the other side of the anode layer of the fuel cell stack. Thus, a plurality of cells of a fuel cell (hereinafter also referred to as a unit cell) is electrically connected to one another through a predetermined current collecting member which is formed by the inter connector, adhesive layer, porous current collecting layer and stack connecting member, etc., and can take out the electricity to the external devices of the fuel cell.

According to the Patent Literature 3 listed below, an example of structure of forming a fuel cell stack has been disclosed wherein the fuel cell stack is formed by disposing a metal made plate shaped current collecting member formed by bending (current collecting member 76) between one side of a cathode layer (oxygen electrode 70) of the unit cell (cell 62 of the fuel cell) and the other side of an inter connector (72) of the unit cell and connecting both unit cells with the metal made plate shaped current collecting member by using a conductive adhesive agent of the LSCF. (See Fig. 4, etc. of Patent Literature 3).

JP2011150959 (A) discloses a cell including a fuel electrode layer, a solid electrolyte layer, and an air electrode layer. The air electrode layer includes a base layer (an LSCF layer) and a current collecting layer (an LSC layer) formed on the top surface of the base layer. A crack passing through in the thickness direction is formed in the current collecting layer.

Youmln G. et al.: "Effect on Sm3+ content on the properties and electrochemical performance of SmxSr1-xCoO3-δ (0.2≤x≤0.8) as an oxygen reduction electrodes on doped ceria electrolytes", Electrochimica Acta, Elsevier Science Publishers, Barking, GB, vol. 56, no. 7, 21 December 2010, pages 2870-2876, XP028177236, ISSN: 0013-4686, DOI: 10.1016/J.ELECTACTA.2010.12.075 describes SSCx materials as promising cathodes for IT-SOFCs.

### [Prior Patent Literature]

### [Patent Literature]

[Patent Literature 1] JP2010-257744 A
[Patent Literature 2] JP2013-012473 A
[Patent Literature 3] JP2005-339904 A
   JP 2011 150959 A

### [Summary of the Invention]

### [Problems to be Solved by the Invention]

Generally, a current collecting member is expected to have a high electric conductivity in order to reduce current collecting loss (electric voltage loss) caused by an electric resistance. Similarly, a cathode layer is expected to have a high electric conductivity in order to enhance the electrode reactivity, keeping the electronic conductivity. Further, in a solid oxide fuel cell operated under a high temperature, a material used for a current collecting member and a cathode layer to exhibit is expected to have a high heat resistance performance.

Among the current collecting members indicated in the Patent Literatures 1 and 2, a lanthanum chromite system perovskite type oxide (LaCrO₃) has been proposed as a main electric conductive material to be used for an inter connector. Further, as a main electric conductive material to be used for a porous current collecting layer, lanthanum strontium cobaltite system perovskite type oxide (such as LSC and LSCF, etc.) has been proposed. Still further, as a main cathode material to be used for a cathode layer, representatively, a lanthanum manganite (LaMnO₃) has been proposed and further, a perovskite type oxide expressed by a general formula LnMO₃ (wherein Ln: La, Sr, Pr or Sm, M: Fe, Co, Mn or Ni) has been used therefor. It is known that the electric conductivity of the LSC is far superior to others among the above ceramics system materials excepting metal materials.

Further, the current collecting member or the cathode layer is expected to have a thermal expansion coefficient which value is approximately the same level with those of other unit cell forming components (which are referred to as "the other member(s)"). Such expectation is based on the demand for suppressing a peeling-off caused by a thermal reaction force generated at the connecting portions between the different materials which have different thermal expansions under a high temperature operation.
As an example, shown in the Patent Literature 3, in order to connect two unit cells, the values of the thermal expansion coefficients of the current collecting member, the cathode layer and the current collecting metallic member have to be in the same level, when the current collecting member (interconnector 72) formed mainly by ceramics materials and the cathode layer are adhered to the current collecting metallic member. The LSC is excellent in exhibiting a large electric conductivity, but the thermal expansion coefficient thereof is relatively large compared to the general metallic materials and the ceramics system materials. Accordingly, appearance of a new material which exhibits a further high electric conductivity and a thermal expansion coefficient that is the same level with the other member(s), used for the current collecting material and the cathode layer has been expected.

The present invention has been made to solve the above-described problems, and it Is an object of the invention to provide a fuel cell equipped with a current collecting member and a cathode layer, at least one of which includes material having a high electric conductivity and a thermal expansion coefficient which level Is approximately the same with the other component materials under a high temperature operation condition of the fuel cell.

### [Means for Solving the Problems]

The fuel cell according to the invention Is defined in claim 1 and Includes an electrolyte layer, a cathode layer
provided at one side of the electrolyte layer, an anode layer provided at another side of the electrolyte layer and a current collecting member electrically connected to at least one of the cathode layer and the anode layer for collecting an electron or taking out an electricity to an exterior of the fuel cell, wherein at least one of the current collecting member and the cathode layer includes a perovskite type oxide which Is represented by a general chemical formula "ABO₃" as a material thereof In which "A"-sites are occupied by "La" and "Sr" and "B"-sites are occupied by "Co" and a portion of "La" is substituted with "Sm" to be represented as "(La,Sm,Sr)CoO₃" and wherein a mole composition ratio of "Sm" relative to the perovskite type oxide Is smaller than a mole composition ratio of "La" before substitution relative to the perovskite type oxide.

A further beneficial embodiment Is disclosed in dependent claim 2.

### [Advantageous Effects of Invention]

According to the fuel cell of the invention, the perovskite type oxide has the basic structure represented as "ABO₃" in which "A"-sites are occupied by "La" and "Sr" and "B"-sites are occupied by "Co" to be represented as "(La,Sr)CoO₃", wherein a portion of "La" of "A"-sites is substituted with "Sm" to be represented as "(La,Sm,Sr)CoO₃" and the electric conductivity of "(La,Sm,Sr)CoO₃" after substitution is greater than the electric conductivity of "(La,Sr)CoO₃" before substitution. Further, the thermal expansion coefficient of the "(La,Sm,Sr)CoO₃" can be reduced to be less than the thermal expansion coefficient of the "(La,Sr)CoO₃" to approximate the value to the material of the other members such as metallic materials and the ceramics system materials.

### [Brief Description of the Drawings]

Fig. 1 is a view indicating an SOFC cell according to the embodiments of the invention, wherein the expression "SOFC" is an abbreviation for Solid Oxide Fuel Cell.
Fig. 2A is a view explaining a crystal structure of the perovskite type oxide.
Fig. 2B is a view explaining another crystal structure of the perovskite type oxide illustrated in Fig. 2A, but showing the state after a portion of the "A"-sites element thereof has been substituted with other elements.
Fig. 3 is a graph showing a relationship between an electric conductivity and a temperature of the oxide associated with the example 1.
Fig. 4 is a graph showing a relationship between a substitution ratio and an electric conductivity of a substitution element associated with an example 2.
Fig. 5 is a graph showing a relationship between a substitution ratio and a thermal expansion coefficient of a substitution element associated with the example 2.
Fig. 6 is a graph showing a substitution ratio and an electric conductivity of a substitution element associated with an example 3.
Fig. 7 is a graph showing a relationship between a substitution ratio and a thermal expansion coefficient of the substitution element associated with the example 3.
Fig. 8 is a graph showing a relationship between a substitution ratio and a cell electric voltage of the substitution element associated with an example 4.
Fig. 9 is a cross-sectional view of a coin-type cell C (disk) associated with the example 4, and,
Fig. 10 is a transverse cross-sectional view of a cylindrical-type cell C (cyl) associated with the example 4.

### [Preferred Embodiments of Invention]

A solid oxide fuel cell (hereinafter referred to simply as "SOFC") which uses an oxygen ion conductive electrolyte layer, will be explained hereinafter in detail as an example of the fuel cell according to the invention. It is noted that the fuel cell according to the present invention is characterized in that the fuel cell uses an electric conductive material (corresponding to a material included in the current collecting member 52) or a cathode material (corresponding to a material included in the cathode layer 2) described in a later explained examples of the invention. Therefore, it may be understood that matters other than the electric conductive material forming the current collecting member 52, (such as, for example, a unit cell structure or method of forming thereof) that are necessary to implement the invention, shall be regarded as a matter of design which a person skilled in the art could have appropriately conceived based on the state of the art.

### (SOFC)

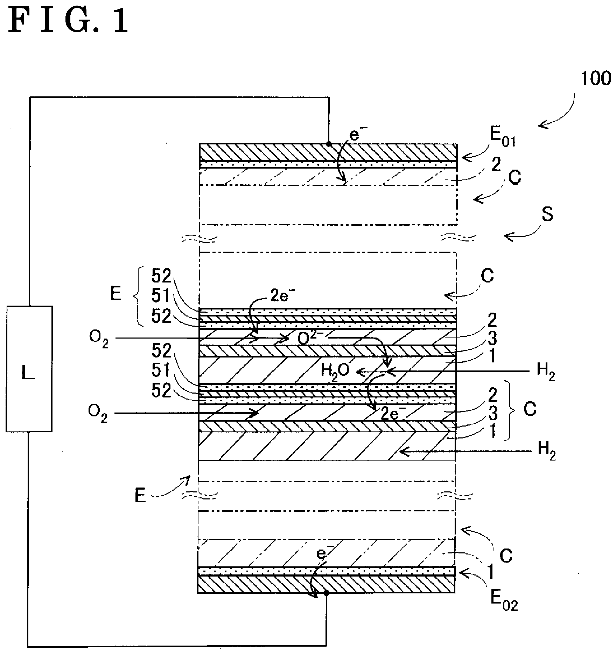

The structure of SOFC 100 of the embodiment of the invention will be explained hereinafter with reference to Fig. 1. Fig. 1 is a cross sectional view showing schematically the structure of a flat plate type SOFC 100 associated with the present embodiment. As shown in the drawing, the flat plate type SOFC 100 is formed to be a multi-layered structure, wherein a plurality of unit cells C and a plurality of current collecting bodies E are layered such that respective surfaces (for example, upper surface and lower surface) are mutually oppositely positioned each other and are layered alternately along in a normal direction. Each unit cell C is structured to be a multilayered structure formed by a flat thin film shaped electrolyte layer 3, a similarly flat thin film shaped cathode layer 2 which is provided on one side (in the drawing, upper side) of the electrolyte layer 3 and a similarly flat thin shaped anode layer 1 which is provided on the other side (in the drawing, lower side) of the electrolyte layer 3.

The current collecting body E is disposed between two adjacently arranged unit cells C and is adhered thereto such that the current collecting body E is sandwiched between the anode layer 1 of the unit cell C layered on the one side and the cathode layer 2 of the unit cell C layered on the other side and adhered to the anode layer 1 of one unit cell C and connected to the cathode layer 2 of the adjacently arranged the other unit cell C. The current collecting body E is also served to separate the oxidizing gas supplied to the cathode layer 2 from the reducing fuel gas supplied to the anode layer 1. It is noted that a fluid passage (not shown in the drawing), through which the fuel gas flows, is provided between the anode layer 1 and the current collecting body E and that another fluid passage (not shown either), through which the oxidizing gas flows, is provided between the cathode layer 2 and the current collecting body E. Further, the current collecting body E is electrically connected to the anode layer 1 of the unit cell C at the one side and is electrically connected to the cathode layer 2 of the adjacently arranged the other unit cell C for collecting the electrons generated as a result of occurrence of an electrode reaction at the anode layer 1 and supplying the cathode layer 2 with the generated electrons to the cathode layer 2. Or, alternatively, a predetermined current collecting body E₀₁ at one end side of the SOFC 100 is electrically connected to a unit cell C layered at the outermost one end side to supply the cathode layer 2 with the electrons through an external circuit. Further, a predetermined current collecting body E₀₂ at the other end side of the SOFC 100 is electrically connected to a unit cell C layered at the outermost the other end side to supply the external circuit with the electrons generated at the anode layer 1.

It is noted here that the current collecting body E, the cathode layer 2 and other cathode forming members of the unit cell C (hereinafter, occasionally referred to simply as "other members") are expected to have the same level thermal expansion coefficients. This can prevent occurrence of any possible defect state, such as peeling-off, due to a thermal reaction force generated at the connecting portions between the different materials which have different thermal expansion coefficients under the high temperature operation.

### (Anode Layer)

The anode layer 1 is a fuel electrode in which an electrode reaction is in progress which generates electrons by the oxidization of the fuel gas due to a contact of the fuel gas supplied by a predetermined method with the oxygen ions transfered through the electrolyte layer 3. As a fuel gas, hydrogen (H₂) is representatively used, but any carbon hydride, such as for example, methane gas, propane gas may be also used.

The structure and function of the anode layer 1 may not be limited to those explained in the embodiments and any anode layer, which has a conventional structure or a function, may be used. Preferably, as an anode forming material for forming the anode layer 1, a well-known cermet, composed of powders of a metal material which is selected considering the catalytic activity, stability under a reducing atmosphere and cost balance, etc., mixed with powders of a properly selected ceramics system material used in the electrolyte layer, may be used. As a representative cermet, an Ni-YSZ cermet can be proposed, which is composed of nickel oxide (NiO) powders as a metal material mixed with yttria-stabilized zirconia (YSZ) as a ceramics system material. As the ceramics system material, YSZ may be substituted with scandia-stabilized zirconia (ScSZ), ceria doped with gadolinium (GDC), or ceria doped with samarium (SDC). As a metal material, nickel (Ni) may be substituted with other metals, such as ferrite (Fe), cobalt (Co), ruthenium (Ru) palladium (Pd) or platinum (Pt).

It is preferable to form the anode layer 1 by a porous body which effectively transmits the fuel gas. The anode layer 1 may also serve as a support for supporting another layer of the unit cell C. The thickness of the anode layer 1 is set to be about 10 to 300 micrometers (µm) but when the anode layer 1 is used as a support for another layer, the thickness may be increased to a thickness greater than a layer to be supported thereby.

### (Electrolyte Layer)

The electrolyte layer 3 may transfer the oxygen ions generated at the cathode layer 2 to the anode layer 1 and is formed by a material which satisfies the following conditions: The first condition is to maintain stability under the operation temperatures of both reducing and oxidization atmospheres and the second condition is to have a high oxygen ion conductivity and a low electronic conductivity to easily make a dense electrolyte film.

The structure and function of the electrolyte layer 3 may not be limited to those explained in the embodiments and any electrolyte layer which has a conventional structure or a function may be used. Preferably, as an electrolyte layer forming material for forming the electrolyte layer 3, a zirconia (ZrO₂) stabilized by adding a different valence metallic oxide, such as yttrium (Y). As a concrete different valence, metallic oxide, a metallic oxide selected from one or more of the metallic oxides among yttrium oxide (Y₂O₃), ytterbium oxide (Yb₂O₃), scandium oxide (Sc₂O₃), gadolinium oxide (Gd₂O₃), samarium oxide (Sm₂O₃), cerium oxide (CeO₂). Preferably, among the above metallic oxides, yttria-stabilized zirconia (YSZ) stabilized by yttrium oxide (Y₂O₃) may be proposed. The thickness of the electrolyte layer may be set to be for example, about 30 µm.

It is noted that when a cobaltite system perovskite type oxide, which will be explained later, is selected as a cathode material and the yttria-stabilized zirconia (YSZ) is selected as the electrolyte material, a high resistant component may likely be generated around the central portion of the border surface between the cathode layer 2 and the electrolyte layer 3. Under such situation, a reaction suppressing layer may be provided at a side of the electrolyte layer 3, where the cathode layer 2 is arranged. As a material, suitable for forming the reaction suppressing layer, a gadolinium oxide (Gd₂O₃) doped ceria (CeO₂) can be proposed.

### (Cathode Layer)

The cathode layer 2 is an air electrode which reduces the oxygen in the air by the electrons conducted within the electrode and sends out the oxygen as the oxygen ions to the electrolyte layer 3. At the cathode layer 2, the oxygen in the air catches the electrons conducted within the electrode via the later explained current collecting body E and an electrode reaction for generating the oxygen ions is in progress to eventually send the oxygen ions to the electrolyte layer 3. The cathode layer 2 is preferably formed by a porous body which is stable under the oxidization atmosphere and effectively transfers gases. As the oxidizing gas, the air can be representatively used, but any other oxidizing gas (for example, oxygen gas) may be used as well.

The structure and function of the cathode layer 2 may not be limited to those explained in the embodiments and any cathode layer which has a conventional structure or a function may be used. As a cathode layer forming material for forming the cathode layer 2 according to the present invention, it is preferable to include a perovskite type oxide ((La,Sm,Sr)CoO₃, or LSSC in abbreviation). The oxide LSSC is the same material with the composition material for forming the current collecting member 52 using as a conductivity material which will be later explained in detail. It is also applicable to use the LSSC not as a main forming composition material, but may be used as a function composition material which enhances the electro conductivity as an additive material to the other cathode forming components which form the cathode layer 2.

As the other cathode forming material, a perovskite type oxide represented as the general formula "ABO₃" may be used wherein "A"-sites are occupied by at least one of the elements La, Sr and Sm and "B"-sites are occupied by at least one of the elements, Ca, Mn, Co, Fe, Cr and Ni. The "A" sites elements may further include at least one or more of the lanthanide elements, such as, Ce (cerium), Pr (praseodymium), Nd (neodymium) and Eu (europium), the alkaline earth metals, such as, Ca, Ba and Ra, Na (sodium) and Cd (cadmium).

It is noted here that the cobaltite system perovskite type oxide which includes a cobalt element in "B"-sites (hereinafter referred to as cobaltite system oxide) has been known to keep function as the cathode layer 2, when the material is used for the SOFC even under the low temperature. As such material, lanthanum strontium cobaltite system perovskite type oxide (LSC), lanthanum strontium cobalt ferrite (LSCF) and samarium strontium cobaltite (SSC) are known. Cobaltite system oxide has been highly evaluated in electrode reaction performance. Particularly, the electric conductivity under the operation temperature condition of LSC is superior to other ceramics system materials excluding the metallic materials. However, the LSC has a relatively high thermal expansion coefficient compared to those of the generally used electrolyte materials and the metallic materials and further development is necessary to assure the stability of the SOFC. From the view point of keeping both stability and reliability for a long-time span, the manganite system perovskite type oxide which includes Mn (manganese) in "B"-sites element has received a certain appreciation. Comparing and balancing the stability and the electrode reaction performance, the LSCF tends to be accepted as a whole.

At the cathode layer 2, gaseous oxygen is adsorbed and dissociated on the cathode material and is connected with the electrons. Thus, the electrode reaction is under progressing wherein the generated oxygen ions are transferred to the electrolyte layer 3. Accordingly, from the view point of accelerating the electrode reaction, the cathode layer 2 is formed to satisfy the first condition that it has a catalytic activity for adsorbing and dissociating the oxygen, the second condition that it has a transferring function for transferring the oxygen ions (ion conductivity) and the third condition that it has an electro-conductivity. The LSSC oxide has the same basic structure as that of the LSC and accordingly, satisfies the first and the second conditions above. The LSSC oxide is considered to have the oxygen activity catalytic function and the oxygen ions conductivity as similar to the LSC and eventually the LSCF. The LSSC oxide is greatly superior to the LSCF in the electric conductivity and further in electro conductivity properties, as will be explained later.

Further, the cathode layer 2 has stability and reliability for a long-time span and accordingly, first, it is expected to be thermodynamically stable under the oxidization atmosphere and second, chemically stable under the operation temperature condition of the SOFC and at the same time expected to be formed by the cathode material which has thermal expansion coefficient closer to the electrolyte layer 3 and the current collecting body E to which the cathode layer is connected.
The LSSC oxide satisfies the first condition just as the LSC oxide and regarding the second condition, it is considered to be chemically stable with respect to the relationship with the connecting members. Further, the LSSC oxide has a smaller thermal expansion coefficient than that of the LSC oxide which will be explained in detail later in the explanation of the embodiments. This makes the thermal expansion coefficient to be closer to those of the electrolyte materials and metallic materials. Thus, the use of the LSSC achieves a longer stability and reliability compared to those of the LSC oxide.

In view of using the same material as the material of the member, which is connected to the cathode layer 2 and has the main purpose of collecting current, the LSSC oxide can be appropriately selected as the cathode material. For example, the later explained current collecting member 52 is a member which covers the front surface of the current collecting body E and is used being connected to the cathode layer 2 and yet includes the LSSC oxide as an electro conductive material. Further, as long as the current collecting member 52 and the cathode layer 2 are formed by the same material, even under the high temperature operation of the SOFC, occurrence of any undesired chemical mutual interaction (reaction) between the current collecting body E (current collecting member 52 and the unit cell C (cathode layer 2) can be prevented and can keep the stability of operation. Further, since the thermal expansion coefficients of the conductive material and the cathode material are the same, a long-time span stability and reliability can be maintained.

### (Current Collecting Body)

The current collecting body E separates the oxidizing gas supplied to the cathode layer 2 from the reducing fuel gas supplied to the anode layer 1 and at the same time, collects electrons generated at the adjacent anode layer 1 and passes the collected electrons through the electrode reaction field of the adjacent cathode layer 2. The current collecting body E serves as a so-called interconnector. For example, the current collecting body E is formed by layering the current collecting members 52 which include conductive material according to the present invention on both side surfaces of a dense separator layer 51 which is formed by a metal material for separating the oxidizing gas and the reducing gas so that the separator layer 51 is sandwiched by the current collecting members from both sides. The current collecting body E is adhered to the unit cells C such that the anode layer 1 of the unit cell C adjacently arranged at one side is adhered to a surface of one collecting member 52 and the cathode layer 2 of the unit cell C adjacently arranged at the other side is adhered to a surface of the other collecting member 52. The current collecting member 52 serves as an adhering layer which assures the adhering strength between the dense separator layer 51 of metallic material and the porous anode layer 1 and cathode layer 2 which main materials are ceramics. The current collecting member 52 is formed by the following perovskite type oxide as a main conductive material.

In other words, the perovskite type oxide is represented by a general formula of "ABO₃" as a material thereof In which "A"-site indicates "La" and "Sr" and "B"-slte indicates "Co" and a portion of "La" is substituted with "Sm" and a mole composition ratio of "Sm" relative to the perovskite type oxide is smaller than a mole composition ratio of "La" before substitution relative to the perovskite type oxide.

In more detail, the perovskite type oxide associated with the embodiments of the invention is represented by a chemical composition formula of "La_{z}Sr_{1-z}CoO₃" (LSC), wherein a portion of "La" is substituted with "Sm" by a mole composition ratio "x" and is represented by the following formula (1) in which the relationship of z-x > 0 is satisfied:

La_{z-x}SmₓSr_{1-z}CoO₃ .... (1)

The current collecting member 52 (or a cathode layer 2) of the SOFC 100 according to the embodiments include the perovskite type oxide represented as the above formula (1) as a conductive material (or a cathode material). As the conductive material, the relationship of values "x" and "z" is 0.01 s "x / z" < 0.5 and it is preferable to satisfy 0.3 ≤ "z" ≤ 0.8 in the formula (1). As a cathode material, the relationship of values "x" and "z" is 0 < "x / z" < 0.72 and "z" = 0.5 in the formula (1).

The perovskite type oxide according to the invention is an oxide which has been obtained by a so-called computational material designing method based on the quantum mechanics. It Is noted here that the electronic structure of an object Is calculated quantitatively based on the Electronic State Theory (Band Theory) and based on the calculated value, the electronic conductivity of the object is presumed. In detail, a simulation is conducted using a predetermined quantum computing software to obtain a magnitude of bandgap of the object (perovskite type oxide). Having analyzed the results, the inventors of the application confirmed that a perovskite type oxide having the basic structure of "(La,Sr)CoO₃" is a dominant: material which can exhibit a high electro conductivity. The oxide material "(La,Sr)CoO₃" has a great thermal expansion coefficient compared to the general metals.

Then, in order to specify perovskite type oxide which has more superior electro conductivity, we substituted a portion of the element which is occupied in the "A"-sites of "(La,Sr)CoO₃" with another element and re-analyzed the result. The candidate element R₁ which is the substitution of La, or the candidate element R₂ which is the substitution of Sr was selected considering the size of ion radius, the number of ion valences and coordination number of La and Sr in the "A"-sites elements. A simulation was conducted using the predetermined computing software to obtain a magnitude of bandgap of the perovskite type oxide ((La,R₁,Sr)CoO₃ and (La,Sr,R₂)CoO₃ each portion of La being substituted with the elements R₁ and R₂. As a result of simulation, the perovskite type oxide, (La,Sm,Sr)CoO₃, in which the element Sm is selected as the candidate element R₁ for the substitution of La, is a dominant material which is expected to exhibit a high electronic conductivity. Actually, the perovskite type oxide with the element Sm which mole composition ratio is smaller than the mole composition ratio of the La before substitution exhibited a great electronic conductivity and a high electric which is higher than the oxide "(La,Sr)CoO₃" before substitution.

Further, actually the thermal expansion coefficient of the substituted (La,Sm,Sr)CoO₃ was measured under the presumed operation temperature of the SOFC and found that the thermal conductivity has been reduced compared to the conductivity of the (La,Sr)CoO₃ This suggests that the thermal expansion coefficient of the (La,Sm,Sr)CoO₃ is closer to those of the general metals and the ceramics system materials which are used as the electrode and the electrolyte of the SOFC.

Supplemental explanation for the selection of the candidate elements R₁ for substitution of La and the candidate element R₂ for substitution of Sr will be made hereinafter. (La,Sr)CoO₃ is a perovskite type oxide which is represented by a general formula "ABO₃" wherein the "A" sites are occupied by rare earth metals (ions) and alkaline earth metals (ions) and "B"-sites are occupied by transitional metals (ions). The perovskite type oxide represented as the general formula "ABO₃" has a basic structure which will be explained hereinafter. Further, it has been known that when the following change is given to a metallic ion occupied in the "A"-sites, the electronic condition is changed.

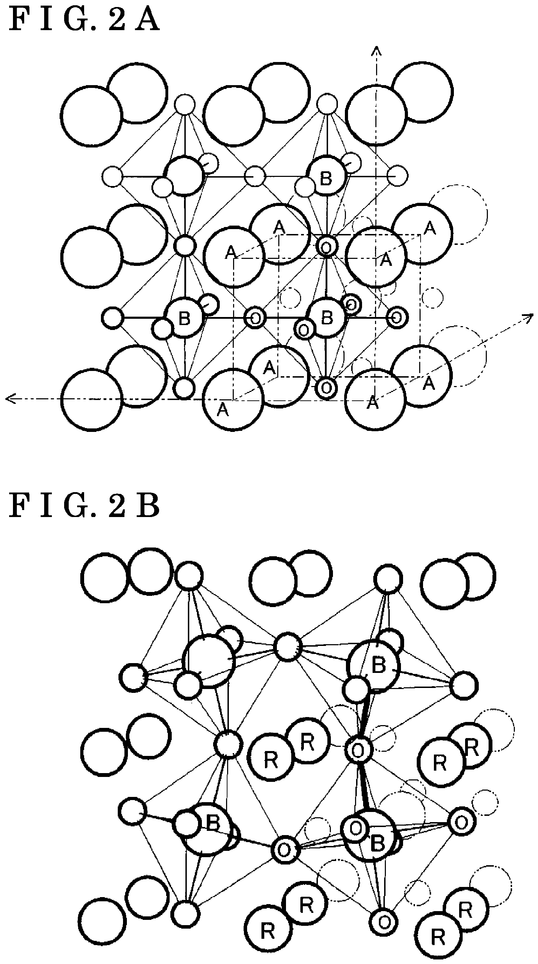

As shown in Fig. 2A, in the perovskite type oxide, metallic ions are arranged in the "B"-sites and are positioned at each center of the cubic crystal structure. The oxygen ions are arranged at each surface center of the cubic crystal structure, centering about the metallic ions at the "B"-sites. In other words, six oxygen ions regularly enclose each metallic ion at the "B"-sites to form an octahedron B-O₆. The octahedron shares the oxygen ions which are located at the top commonly with the adjacent octahedrons and connected in vertical, horizontal and height directions. The metallic ions at the "A"-sites are arranged at each top point of the cubic crystals to fill the surrounding spaces of the octahedrons.

As shown in Fig. 2B, it is confirmed that if a change is given to the ions of the "A"-sites so that the radius thereof becomes smaller (character R in Fig. 2B), the optimally arranged lattice of the cubic crystal is strained and the connecting angle B-O-B of the octahedrons becomes smaller than 180 degrees (such change of angle is shown with an extra-bold line in Fig. 2B, as an example). Thus, the band width becomes controllable. It was also confirmed that if a portion of the metallic ion at the "A"-sites is substituted with a metallic ion R having a different radius, the strains in the lattice become locally different and the effect of local lattice strains can be expected.

It was also confirmed that when a portion of metallic ion in the "A"-sites is substituted with the metallic ion with different valence, in other words, when the metallic ion with n-valence in the A-sites is substituted with the metallic ion with (n-1) valence or (n+1) by the number of "m", this corresponds to the electron doping or Hall doping by the number of "m". Thus, it is confirmed that the changing of the electron state and mutual interaction of the electron ions may enhance the electronic conductivity. In other words, when the perovskite type oxide (La,Sr)CoO₃ has a certain doping effect, it is preferable to maintain the current valence balancing.

Thus, the inventors of the application actually conducted the simulation using a quantum computing software by selecting a plurality of candidate elements R₁ for replacing the La and elements R₂ for replacing the Sr focusing on the ion radius, the number of ion valences and the number of coordination. As the result of the simulation among the candidate elements, the perovskite type oxide LSSC ((La,Sm,Sr)CoO₃) in which Sm corresponds to the candidate element R₁, has a large electric conductivity.
It is noted here that as the quantum computing software, a generalized gradient approximation (GGA) method which is a known density functional theory was used. The other candidate elements R₁ and R₂ other than Sm could also obtain some effects. For example, as the candidate element R₁, Ce, Pr and Nd, as the candidate element R₂, Ca, Ba and Ra were simulated. However, Samarium (Sm) obtained the best expected result among these candidate elements.

The value "x" in the formula (1) above indicates the mole composition ratio of the element "Sm" relative to the perovskite type oxide and the value "z" indicates the mole composition ratio of "La" which is one of the elements La and Sr in the "A"-sites of the perovskite type oxide LSC having the basic composition of (La,Sr)CoO₃ before substitution with other elements relative to the perovskite type oxide. The mole composition ratio of "Sr" of the other of the elements La and Sr before substitution relative to the perovsklte type oxide is indicated as "1 - z".

The ratio "x / z" which is the ratio of the mole composition ratio "x" of the element Sm after substitution relative to the mole composition ratio "z" of the element La before substitution indicates a parameter for the substitution ratio of the Sm relative to the La and the range that this ratio "x / z" can take is 0.01 ≤ x / z < 0.5 as defined in claim 1, considering the expected effects of obtaining a high electric conductivity and an optimum value of
thermal expansion coefficient and preferably 0.01 ≤ x / z ≤ 0.25. In the latter range, the electric conductivity Is apparently high and the thermal expansion coefficient becomes closer to the optimum value and Is preferable to assure the output performance of the SOFC. It is noted that the ratio "x / z" Is hereinafter referred to simply as "substitution ratio of Sm (Samarium)".

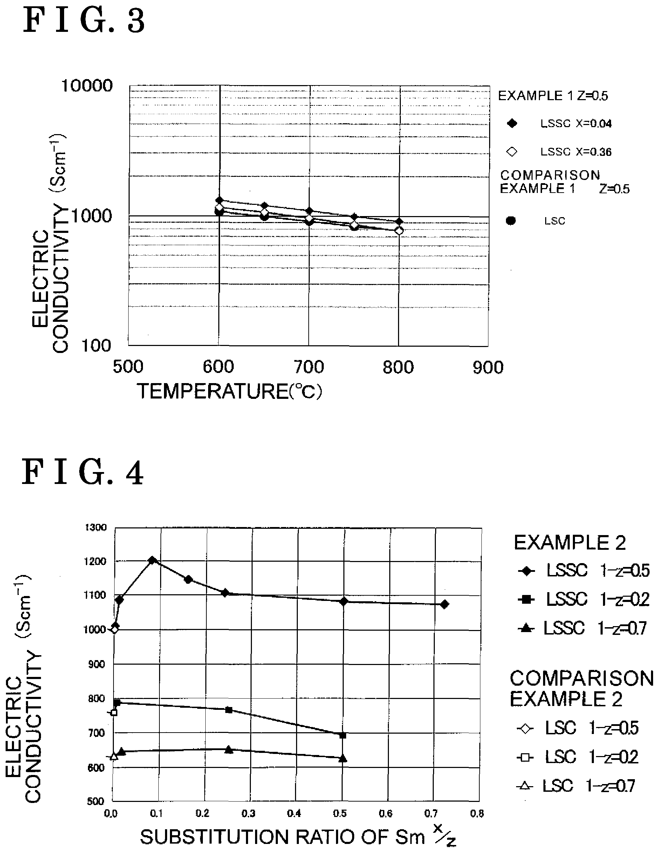

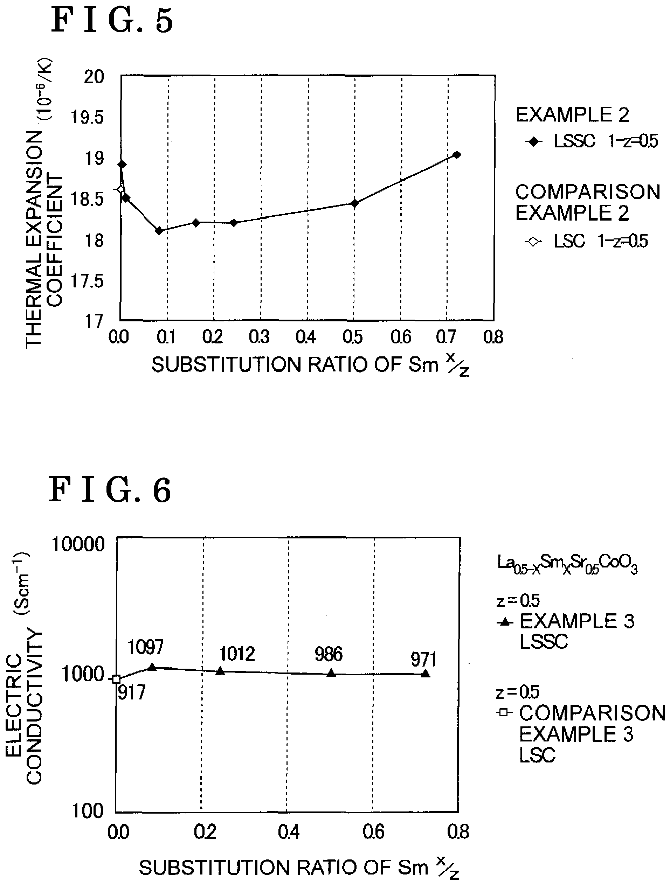

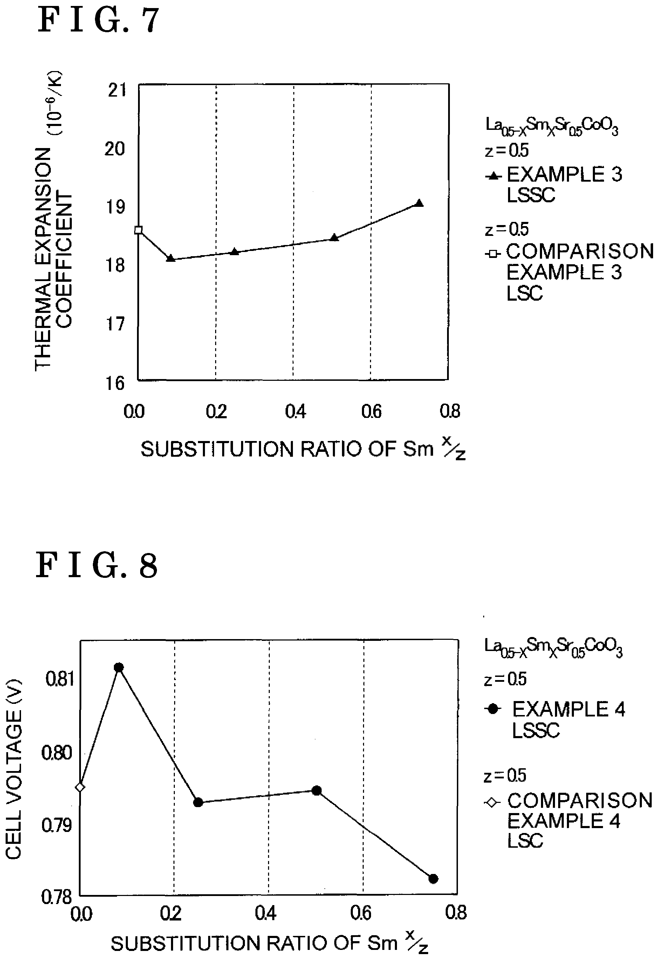

The amount of La substituted with Sm is not necessarily large, but if the ratio "x / z" becomes smaller than the value 0.01, the effect of improving the electric conductivity may not be sufficient. Further, as will be explained later in the embodiments, the relationship between the substitution ratio and the electric conductivity of Sm is Indicated generally as a gradual inclination on the downside to show an inverse proportional relationship (See Figs. 4 and 6). When the substitution ratio "x/z" becomes large, the thermal expansion coefficient tends to be increasing (See Figs. 5 and 7). When the ratio "x/z" exceeds the value 0.5, the effect of improving the electric conductivity may be decreased and the thermal expansion coefficient tends to be increased. It is, therefore, particularly preferable to set the ratio "x / z" in the range of "0.01 ≤ "x / z" ≤ 0.25, In which the electric conductivity is Improved and yet the proper thermal expansion coefficient can be obtained. Further, considering obtaining of a large electric conductivity, the mole composition ratio "x" of the element Sm is preferably set to be smaller than the mole composition ratio "z" of the element La before substitution (z - x > 0).

When the perovskite type oxide Is used as a cathode material, the
applicable range of the substitution ratio "x / z" of Sm is in the range of 0 < "x / z" < 0.72. The range of the substitution ratio "x / z" used as a cathode material is different from the substitution ratio "x / z" used as an electric conductivity material in the upper limit value. As will be later explained in detail, when the ratio "x / z" becomes equal to or larger than the value 0.72, the output performance (cell electric voltage) of the SOFC tends to be decreased compared to that of the LSC (See Fig. 8). Accordingly, the upper limit of the ratio used for the cathode material is set to be 0.72. It is preferable to set the ratio "x / z" to be In the range of 0.08 ≤ x / z ≤ 0.5. In this range, apparently, the electric conductivity Is high (See Fig. 6) and the thermal expansion coefficient becomes closer to the proper value (See Fig. 7) to assure the output performance of the SOFC.

It is considered to be preferable, If the mole composition ratio "z" of La before substitution relative to the perovskite type oxide Is in the range of 0.3 ≤ "z" ≤ 0.8. In this range, a sufficiently large electric conductivity can be obtained by the perovskite type oxide represented as "La_{z}Sr_{1-z}CoO₃" before substitution. It Is further preferable to set the mole composition ratio "z" to be in the range of 0.4 ≤ "z" ≤ 0.7. In this range, further preferable electric conductivity can be obtained. In other words, the mole composition ratio "1 - z" of Sr relative to the perovskite type oxide is in the range of 0.2 ≤ "1 - z" ≤ 0.7 as defined in claim 1, and it is preferable if the ratio "1 - z" is in the range of 0.3 ≤ "1 - z" ≤ 0.6.

As explained above, according to the SOFC of the present invention, the SOFC is characterized in that it includes an LSSC which is a perovskite type oxide as a conductive material In the current collecting member 52 or as a cathode material in the cathode layer. The conductive material or a cathode material which includes LSSC has the effect of improving the electric conductivity and decreasing the thermal expansion coefficient more effectively than a conventional oxide LSC. Thus, the thermal expansion coefficient difference between a general metallic material and ceramics material for SOFC can be effectively reduced. It is noted however, the SOFC associated with the invention is not limited by the sub-materials or the elements other than the LSSC forming current collecting member 52 or cathode layer 2, as long as they exhibit the same effects.

The use of the perovskite type oxide as an electric conductive material for the current collecting member 52 is not limited to the method for covering the separator layer 51 which is made by a metal material to connect the unit cells C through the current collecting body E. For example, the perovskite type oxide as the electric conductive material may be used for forming a stack connecting member for connecting cell stacks S on which the unit cell C is layered or may be used for the component of the electric conductive adhesive agent for adhering the stack connecting members to both cell stacks S. The stack connecting member is a member which connects, for example, the cathode layer of the one cell stack S with the current collecting body of the other one cell stack S. In more detail, according to the cell stack 1 for the horizontal stripe fuel cell disclosed in the Patent Literature 1, the cell stack connecting member 19 corresponds to such stack connecting member. Further, as a component of the electric conductive adhesive agent, the LSSC can be used for connecting the stack connecting member 19 and the porous current collecting layer 17.

According to the examples of the embodiments of the invention, the inventors have explained the adaptively of the thermal expansion coefficient considering the connection between the current collecting member 52 and a metallic material (separator layer 51), being aware of the operation under the intermediate temperature zone (700 to 800°C). However, the use of conductive material (or cathode material) which includes LSSC is not only the purpose of connection with the metallic material. For example, the oxide may be used for the purpose of connection with the lanthanum chromite system ceramics system material. In detail, according to an example disclosed in the Patent Literature 2, the flat plate type SOFC is disclosed wherein the LSSC is used as a material for forming a connecting layer 12 (commonly used as the air electrode 31) which is connected to the lanthanum chromite system interconnector 1 through a protection layer 11.

### (Manufacture of SOFC)

Next, the manufacturing method for the fuel cell associated with the fuel cell of the present invention will be explained hereinafter. The unit cell C according to the examples is manufacture by a well-known conventional method. For example, first, the anode layer precursor and the electrolyte layer precursor are layered to obtain a half-cell layered body formed by the anode layer and the electrolyte layer co-burned in advance. The cathode layer precursor is layered on the electrolyte layer of the half-cell layered body and is burned to obtain the unit cell C.

The anode layer precursor can be for example, manufactured by the following method. First, slurry is prepared by mixing the mixture of ceramics system material powder and metallic material powder forming the anode layer with the binder and pore forming agent and solvent. Then, green sheet is made by the prepared slurry and the green sheet is cut in a predetermined shape and dried. Thus, the green sheet shaped anode layer precursor is obtained. As the binder, for preparing the slurry, polyvinyl butyral or ethyl cellulose, etc., and as the pore forming agent, fine particles of polymethacrylic acid or carbon etc., as the solvent, toluene, butanol or ethanol can be suitably used. It is noted here that precursor slurries of each layer, which will be explained later, can be also prepared as explained above.

Similar to the anode layer precursor, slurry is prepared using the electrolyte layer material powders and the prepared slurry is layered on the surface of the anode layer precursor by screen printing and is dried. Then the material formed by layering the anode layer precursor and the electrolyte layer precursor is co-burned under the temperature which is suitable for both materials (for example, 1300°C, or more) for a certain time to obtain a half-cell layered body which is formed by layering the anode layer 1 and the electrolyte layer 3.

Next, the cathode layer precursor is formed. Similar to the anode layer precursor, slurry is prepared by using a metallic oxide powder for the cathode layer 2. When using the LSSC as the cathode material, the metallic oxide powder can be composed. The raw material powders of the LSSC can be composed by each predetermined composite each of which includes La, Sr, Sm and Co elements, respectively. These predetermined composites are measured to have a desired mole composition ratio and then mixed and composed by a known solid phase reaction method to thereby obtain the raw material powders of the LSSC. If the solid phase reaction method is used, as the predetermined composite, oxide, carbonate, nitrate or acetate including each element can be used. The composition method is not limited to the solid phase reaction method, but other known methods using liquid phase may be used. For example, alkaline deposition method, co-precipitation method, sol-gel method or citrate method may be used.
The slurry is prepared by mixing the obtained raw material powders of the LSSC with binder, pore forming agent, if necessary, and solvent. Then the prepared slurry is layered on the surface of the half-cell layered body at the electrolyte layer side by the screen printing to form the cathode layer precursor and thus prepared cathode layer precursor is dried. The precursor of the unit cell C which is formed by layering the cathode layer precursor on the upper surface of the layered body at the electrolyte layer 3 side is burned under the temperature preferably 900 to 1250°C for a certain time, preferably for one hour or more but not exceeding twelve (12) hours. Thus, the unit cell C of the SOFC can be manufactured. The order of layering the precursors one another is not limited and as to the printing method, slurry coating, tape casting, or doctor blade method may be used other than the screen printing method.

Next, the manufacturing method of the current collecting body E will be explained. As the separator layer 51 of the current collecting body E, a predetermined shaped, metal plate such as Ni, Fe - Cr or SUS (Steel Use Stainless) can be used. It is also noted that the raw material powders for the LSSC used as the current collecting member 52 may be composed as similar to the raw material powders of the cathode material.

The raw material powders of the LSSC can be formed to be a current collecting member 52 molding by any known molding method such as, uniaxial compression method, static hydraulic pressure press forming, or extrusion forming. Alternatively, first, a slurry is prepared by mixing the raw material powders of the LSSC with a predetermined binder and solvent and as similar with the method for manufacturing cell elements of the unit cell C, the precursor of a desired shape is formed from the prepared slurry and then burned to obtain a molding of the current collecting member 52. The current collecting member 52 is disposed between the separator layer 51 and the unit cell C and layered in order to integrally manufacture the SOFC stack in which each unit cell C is connected to each other. Or, further as an alternative method, the slurry of the LSSC is prepared to be in a paste shape and thus pasted slurry is applied on both surfaces of the separator layer 51 and the surface of the unit cell C at each predetermined position to connect the unit cells C and dried and burned to integrally manufacture the SOFC stack in which each unit cell C is connected to each other.

It is noted here that the current collecting member or the cathode layer associated with the present invention can be used for the SOFC which has various different structures and is not limited to the structure in which the flat plate type unit cells are layered. It is preferably applicable to the SOFC which has a unit cell having a cylindrical shaped type, or a hollow cylindrical flat plate type formed by compressing the cylinder from the outer cylindrical surface. For example, a known unit cell of the hollow cylindrical flat plate type disclosed in the Patent Literature 3 as explained at the beginning of the description can be used for the LSSC as the electric conductive material or the cathode material which forms an interconnector 72 connected to one side cell 62 of the fuel cell, an oxygen electrode 70 of the other side cell 62 of the fuel cell, a current collecting member 76 interposed between the both cells, adhesive agent 120 which adheres these elements, end portion side current collecting member 109 arranged at the end of the electricity generation unit, etc. According to an example disclosed in another patent document JP 2008-71712 A, the LSSC can be applicable as the electric conductive material or the cathode material which forms outside electrode (cathode) layer 20, outside electrode terminal 22, conductive sealing members 32, 102, 120, adhering member 55, external terminal 56, connecting member 72 and connecting electrode terminals 96 and 116, etc. Further, as for the fuel cell, the SOFC which uses the electrolyte layer having H⁺ conductivity may be used. The fuel cell type is not limited to the solid oxide fuel cell and any type fuel cell may be applicable, such as for example, the phosphate, or solid polymer type fuel cell may be applicable to the invention.

### [Examples]

The examples of the invention will be explained hereinafter. The first embodiment indicates the evaluation result of the LSSC evaluated as use of the conductivity material of SOFC and the second embodiment indicates the evaluation of the LSSC evaluated as use of the cathode material. The following example results indicate some concrete implementation results of the present invention but the invention is not limited to these embodiments.

### (First Embodiment: Conductivity Material)

According to the first embodiment, the evaluation was made for the LSSC used as the conductivity material for the SOFC. The LSSC moldings of the examples 1 and 2 were prepared and then evaluation was made for (1) the electric conductivity and (2) thermal expansion coefficient.

### [Preparation of Perovskite Type Oxide Molding]

### (Example 1)

As the example 1, the LSSC molding was prepared according to the following process.

### (LSSC Molding)

The preparation of the raw material powders of the LSSC was made by the solid phase reaction method. In order to obtain LSSC with a desired mole composition ratio, the powders of various metallic oxides or the chlorides which are the raw materials were measured. In detail, the La₂O₃ powders, SrCO₃ powders, Sm₂O₃ powders and C_{O3}O₄ powders were used. After wet mixing of these powders in the solvent and removing the solvent, the powders were burned at the temperature of 800°C and crushed to obtain the LSSC raw material powders with the average particle diameter of 0.5 µm (D50).

Thus, obtained raw material powders were molded by uniaxial compression molding method and then conducted the powder compacting molding using the CIP method (Cold Isostatic Pressing) under the pressure of 245 MPa then burned at the temperature of 1000°C. Thus, the powders were molded to be in the pellet shaped LSSC molding. A plurality of LSSC molding sample each of which mole composition ratio "x" is within the predetermined range were made according to the formula (1), [La_{z-x}SmₓSr_{1-z}CoO₃], wherein when the value "z" equals to 0.5 ("z" = 0.5), the mole composition ratio "x" was in the predetermined range. (Sample Nos.1-1 and 1-2 of the example 1 in the Table 1)

### (Example 2)

As the example 2, the LSSC molding was prepared according to the following process.

### (LSSC Molding)

Similar to the example 1, the pellet shaped LSSC molding was obtained. A plurality of LSSC molding samples which are within the predetermined range of substitution ratio of Sm "x / z" were made according to the formula (1) [La_{z-x}SmₓSr_{1-z}CoO₃], wherein the value of mole composition ratio "1 - z" of Sr was a predetermined ratio and the substitution ratio "x / z" of Sm was in the predetermined range. (Sample Nos. 1 through 3 of the Example 2 in the Table 1)

### (Comparison Example 1)

### (LSC Molding)

By the manufacturing method similar to the method conducted at the example 1, pellet shaped LSC molding was obtained. In the formula [La_{z}Sr_{1-z}CoO₃], the LSC molding sample in which the mole composition ratio "z" of "La" equals to 0.5 was formed. (See Sample No. 1 of the Comparison Example 1 in Table 1)

### (Comparison Example 2)

By the manufacturing method similar to the method conducted at the example 1, pellet shaped LSC molding was obtained. In the formula [La_{z}Sr_{1-z}CoO₃], the LSC molding sample in which the mole composition ratio "1-z" of Sr is within the predetermined range was formed. (See Comparison Example 2: Nos. 1 through 3 in Table 1)

### [Evaluation of Perovskite Type Oxide Molding]

### (Identification of Perovskite Type Oxide Molding)

The X-ray diffraction spectrum data and ICP (Inductivity Coupled Plasma) emission spectrum analysis data of each sample LSSC molding obtained in the examples 1 and 2 were obtained and the confirmation of the crystalline phase and the identification of the structure thereof were made. As the result, the sample moldings obtained in the example 1 and 2 were found to be the moldings which include the perovskite type oxide associated with the invention.

### 1) Evaluation of Electric Conductivity

The electric conductivity of each sample LSSC molding obtained in the examples 1 and 2 was measured under the predetermined environmental temperature. In Fig. 3, the change of the environmental temperature (600 to 800°C) relative to the electric conductivity of the LSSC moldings of the example 1 (Sample Nos. 1-1 and 1-2) is indicated. In Fig. 4, the change of the electric conductivity relative to the substitution ratio "x / z" of Sm of the LSSC moldings of the example 2 (Sample Nos. 1 through 3) at the temperature of 650°C is indicated. These changes were compared with the results of change of the samples of comparison examples. Further, the evaluation results of the electric conductivity of the samples in the examples 1 and 2 were compared to those of the comparison samples 1 and 2 in the Table 1 for the purpose of comparison therebetween. The symbols ⊚,○,Δ are the evaluation result of the electric conductivity, wherein ⊚ indicates "remarkably excellent compared to the samples of comparison examples", ○ indicates "better than the samples of the comparison examples" and Δ indicates "the same level or inferior to the samples of the comparison examples". It is noted that the results of the evaluation of the samples of the comparison examples per se are omitted. These comparison examples are listed only for the purpose of comparison reference.

From Fig. 3, it was confirmed that when the environmental temperature is changed in the range between 600 and 800°C, the electric conductivity of the LSSC molding becomes larger than that of the LSC. Even in a wide temperature range including the temperature equal to or lower than 600°C and equal to or higher than 800°C, the electric conductivity of the LSSC is presumed to be greater than that of the LSC. The inventors of the present application focused on the dropping tendency of the electric conductivity as the increase of the environmental temperature. In other words, temperature dependency of the electric conductivity indicates the metallic behavior, and accordingly, in view point of the electric conductivity, the LSSC is an appropriate choice of material which has an electric conductivity suitable for a substitution of the metallic material.

Further, from Fig. 4, the electric conductivity of the LSSC is generally larger than that of the LSC, within the appropriate range of substitution ratio of Sm, in a wide range of mole composition ratio "1 - z" of Sr relative to the perovskite type oxide. Thus, it was confirmed that it is effective to substitute a portion of the La in the LSC with Sm. From Fig. 4, it was confirmed that within the range of the substitution ratio "x / z" of Sm being 0.01 ≤ "x / z" ≤ 0.25, the electric conductivity of LSSC is larger than that of LSC by maximum of 20 % and accordingly it was also confirmed that it is effective to substitute the portion of La in the LSC with Sm. It was found that when the range of mole composition ratio "1 - z" of Sr is within 0.2 ≤ "1 - z" ≤ 0.7, the electric conductivity of the LSSC molding becomes larger than that of the LSC.
According to the result of the experiment, when the mole composition ratio "z" of La equals to 0.3 (z = 0.3), and the substitution ratio "x / z" of Sm is within the range of 0.01 ≤ "x / z" ≤ 0.5, the electric conductivity of the LSSC becomes larger than the electric conductivity of the LSC. Further, when the value "z" equals to 0.5 (z = 0.5), and the substitution ratio "x / z" of Sm is within the range of 0.01 ≤ "x / z" ≤ 0.72, the electric conductivity of the LSSC becomes larger than the electric conductivity of the LSC. Still further, when the value "z" equals to 0.8 (z = 0.8), and the substitution ratio "x / z" of Sm is within the range of 0.01 ≤ "x / z" < 0.5, the electric conductivity of the LSSC becomes larger than the electric conductivity of the LSC.

As explained above, the SOFC (fuel cell) of the present invention uses the perovskite type oxide explained in the embodiments or the examples of the present invention and includes an electrolyte layer 3, a cathode layer 2 provided at one side of the electrolyte layer 3, an anode layer 1 provided at the other side of the electrolyte layer 3 and a current collecting body E electrically connected to at least one of the cathode layer 2 and the anode layer 1 for collecting electrons which perform an electrode reaction or taking out electricity to an exterior of a unit cell C or the SOFC 100, wherein a current collecting member 52 forming the current collecting body E has a perovskite type oxide structure which includes a perovskite type oxide represented as a general chemical formula "ABO₃" as an electric conductivity material, wherein "A"-sites are occupied by La and Sr and "B"-sites are occupied by Co and wherein a portion of the La in the "A"-sites is substituted with Sm and a mole composition ratio of the Sm relative to the perovskite type oxide is smaller than the mole composition ratio of the La before substitution relative to the perovskite type oxide.

By exhibiting the electric conductivity of the electric conductivity material larger than a conventional material of (La,Sr)CoO₃, the electric voltage loss due to an electric resistance of the current collecting member 52 can be reduced and the output performance of the SOFC 100 can be improved. Generally, the SOFC 100 generates electricity under a state that a plurality of unit cells C has layered one another and each of the unit cells C is electrically connected through the current collecting body E and accordingly, the electric resistance becomes reduced to improve the output performance of the fuel cell.

According to the result of the example 2 above, it was confirmed that when the range of mole composition ratio "1 - z" of Sr of the LSSC that can be taken is 0.2 ≤ "1 - z" ≤ 0.7 and the range of substitution ratio "x / z" of Sm is 0.01 ≤ "x / z" < 0.5, under the above mole composition ratio of Sr, the electric conductivity of the LSC before substitution of Sm becomes large and these ranges of the mole composition ratio of Sr and the substitution ratio of Sm are preferable to have a large electric conductivity. Further, it was confirmed that the above effect can be achieved when the range of substitution ratio "x / z" of Sm is 0.01 ≤ "x / z" ≤ 0.25 and such range of the substitution is more preferable and output performance of the fuel cell can be improved.

It is noted here that the range 0.2 ≤ "1 - z" ≤ 0.7 of the mole composition ratio "1 - z" of Sr that can be taken, corresponds to the range 0.3 ≤ "z" ≤ 0.8 of the mole composition ratio "z" of La.

### 2) Evaluation of Thermal Expansion Coefficient

Each thermal expansion coefficient of each molding sample of LSSC indicated in the example 2 was measured under a predetermined environmental temperature. The change of the thermal expansion coefficient relative to the substitution ratio "x / z" of Sm of the example 2 (Sample No. 2 in the Table 1) at the temperature of 650°C is shown in Fig. 5. Similar to the evaluation of the electric conductivity, the evaluation results of the example 2 regarding to the thermal expansion coefficient, are illustrated in the Table 1 with the results of the comparison example 2 for relative evaluation.

It is preferable to approximate the thermal expansion coefficient of the electric conductivity material of the present invention which is used as a current collecting member by adhering to the other materials to the thermal expansion coefficient of the mating member to be adhered. A large electric conductivity is required for the current collecting member as an original property, but a metallic material is frequently selected as the mating member. The thermal expansion coefficient of a metallic material of the other member(s) to be adhered is presumed to be in the range of 11 to 12 × 10⁻⁶ (K⁻¹) (presumed thermal expansion coefficient). From Fig. 5, it was apparent that the thermal expansion coefficient of the LSSC molding approximates more to the presumed thermal expansion coefficient of a metallic material than that of the LSC. Thus, a preferable result was obtained for the LSSC.

The LSC has a superior electric conductivity and the thermal expansion coefficient is large compared to those of the general metallic material and the ceramics system material. An appearance of a conductive material or a cathode material which has both large electric conductivity and the thermal expansion coefficient which approximates those of the other members has been expected. The purpose of the embodiments explained above is to realize the above appearance that the fuel cell which has a current collecting member having a large electric conductivity and a thermal expansion coefficient which level is as close as the other members to be adhered to under the high temperature operation environment.

As explained, the fuel cell (SOFC) 100 according to the invention includes a current collecting member 52 associated with the embodiments including a perovskite type oxide LSSC associated with the embodiments as an electric conductive material. Accordingly, the electric conductivity is increased and at the same time the thermal expansion coefficient of the (La,Sm,Sr)CoO₃ is smaller than that of the (La,Sr)CoO₃ to be able to suppress peeling-off phenomenon between the current collecting member 52 and the separator layer 51 which has a metallic material as the main composition due to the difference in thermal expansion coefficient between the ceramics system material and the metallic material under a high temperature operation environment. Thus, the contact resistance can be reduced to improve the output performance of the fuel cell.

Further, since the thermal expansion coefficient of the (La,Sm,Sr)CoO₃ is smaller than that of the (La,Sr)CoO₃, a chipping which may be generated due to a difference in thermal expansion coefficient between the (La,Sm,Sr)CoO₃ and other cell components, such as separator layer 51, cathode layer 2 and anode layer 1 can be suppressed thereby to improve the reliability.

From the result of the example 2 above, it was confirmed that when the range of mole composition ratio "1-z" of Sr of the LSSC that can be taken is 0.2 ≤ "1 - z" ≤ 0.7 and the range of substitution ratio of Sm "x / z" is 0.01 ≤ "x / z" < 0.5 under the mole composition ratio above, the electric conductivity of the LSC before substitution of Sm becomes large and under these ranges of the mole composition ratio of Sr and the substitution ratio of Sm, a large electric conductivity can be obtained. Further, it was confirmed that the above effect of the invention can be suitably achieved when the range of substitution ratio "x / z" of Sm is 0.01 ≤ "x / z" ≤ 0.25 and accordingly it is more preferable to improve the output performance of the fuel cell under this range.

### <Second Embodiment: Cathode Material>

As the second embodiment, the LSSC used as the SOFC was evaluated. The LSSC molding of the example 3 was prepared and evaluated as similar to the evaluation made for the LSSC molding of the first embodiment. At the same time, a coin shaped cell C (disk) of the example 4 (corresponding to the unit cell C of the SOFC) was prepared and the output voltage was measured in a case where the LSSC was used as the cathode material. Based on the measured output voltage, the output voltage of the cylindrical type cell C (cyl) which corresponds to the coin shaped cell C was calculated by simulation and the electricity generation performance was evaluated as the SOFC cell of the example 4.

### [Preparation of Perovskite Type Oxide Molding]

### (Example 3)

As the example 3, LSSC molding was obtained by the following method.

### (LSSC Molding)

A pellet shaped LSSC molding was obtained by the method similar to the method used for obtaining the example 1. A plurality of LSSC molding samples was prepared by composing plural kinds of LSSC raw material powders which are within the predetermined range of mole composition ratio "x" of Sm when the value "z" equals to 0.5 ("z" = 0.5) in the formula (1), [La_{z-x}SmxSr_{1-z}CoO₃]. (Sample Nos. 1 through 4 in the Table 1).

### <Comparison Example 3>

### (LSSC Molding)

Similar to the method used for the comparison example 1, the molding sample of LSC (La_{0.5}Sr_{0.5}CoO₃) of pellet shape having the value "z" = 0.5 was obtained.

### [Evaluation of Perovskite type oxide]

### 1) Evaluation of Electric Conductivity:

Similar to the examples 1 and 2, each LSSC molding sample in example 3 was identified and it was confirmed that each sample in the example 3 is a molding which includes the perovskite type oxide associated with the invention. Then, each electric conductivity of obtained sample of LSSC of the example 3 was measured under the predetermined temperature environment. In Fig. 6, the change of electric conductivity relative to the substitution ratio "x / z" of Sm in the LSSC of the example 3 is shown under the temperature of 700°C.

From Fig. 6, it was confirmed by the experiment as similar to the example 1 that the each LSSC molding of example 3 has large electric conductivity than the LSSC molding of the comparison example 3 under the temperature of 700°C. The effect that the electric conductivity of the LSSC molding becomes larger than the electric conductivity of the LSC of the comparison example 3, when the substitution ratio "x / z" of Sm is in the range of 0 < "x / z" ≤ 0.72 was confirmed.

### 2) Evaluation of Thermal Expansion Coefficient

Each thermal expansion coefficient of obtained sample of LSSC of the example 3 was measured under the temperature of 700°C. In Fig. 7, the change of thermal expansion coefficient relative to the substitution ratio "x / z" of Sm in the LSSC of the example 3 is shown.

It is preferable to approximate the thermal expansion coefficient of the cathode layer to the thermal expansion coefficient of the mating member to be adhered to the cathode layer in the SOFC. The cathode layer is assumed to be adhered to an electrolyte layer, a reaction suppression layer or a current collecting member which are formed by ceramics system materials or a current collecting member which is formed by a metallic material as the mating member to be adhered.
The thermal expansion coefficient which is suitable for the mating member is presumed to be in the range of 11 to 12 × 10⁻⁶ (K⁻¹) (presumed thermal expansion coefficient). From the graph shown in Fig. 7, under the temperature of 700°C, the thermal expansion coefficient of each LSSC molding of the example 3 becomes smaller in the range of 0 < "x / z" ≤ 0.5, wherein "x / z" represents substitution ratio of Sm and approximates more to the presumed thermal expansion coefficient. Thus, a preferable result was obtained for the LSSC.

### (Preparation of Coin Type Cell)

### (Example 4)

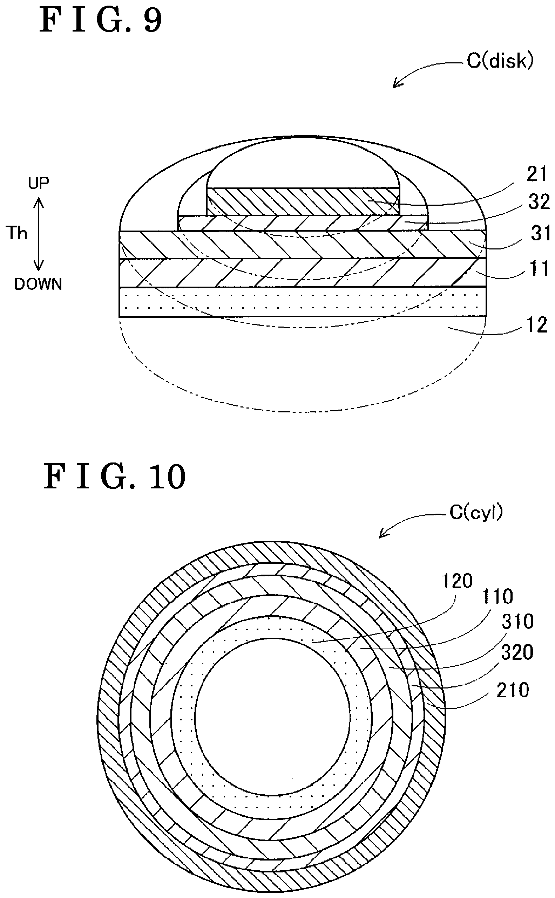

In order to evaluate the output performance of the SOFC of the example 4, the coin type cell C (disk) in which the LSSC molding was used for cathode layer by the following process. A plurality of coin type cell C (disk) was prepared as shown in Fig. 9, by using plural kinds of pastes for use for cathode layer (cathode material) including LSSC powders having different mole composition ratio "x" in the compound represented by the formula (1) [La_{z-x}SmₓSr_{1-z}CoO₃].

### (Preparation of Anode Layer Supporting Precursor)

First, commercially available nickel oxide (NiO) powders with particle diameter of about 0.5 µm was mixed with yttrium stabilized zirconia 8YSZ (Y₂O₃: 8 mole %) powders with particle diameter of about 0.5 µm with the mixing ratio of 6:4 by weight and obtained mixed powders for the anode electrode supporting material. Thus, obtained mixed powders for anode electrode material was mixed with xylene as a solvent, polyvinylbutyral as an organic binder material, acrylic resin as a pore forming material and phthalic ester as a reversible material with the mixing ratio of 48 - 58: 24: 8.5: 5 - 15: 4.5 by weight and the obtained mixture was dispersed in the xylene and a slurry was formed by kneading the mixture by ball mill. A sheet was formed from the slurry on the sheet substrate of PET (polyethylene terephthalate) by a doctor blade method. The sheet was then dried and an anode layer supporting precursor with a thickness of 0.5 - 1.0 mm was prepared.

### (Preparation of Anode Layer Paste)

The anode layer paste was prepared by mixing the nickel oxide (NiO) powders, yttrium stabilized zirconia 8YSZ (Y₂O₃: 8 mole %) powders which are the same powders for preparing the anode layer supporting precursor, alpha-terpineol as a solvent and ethyl cellulose as a binder with the mixing ratio of 48: 32: 18: 2 by weight and then the obtained mixture was sufficiently kneaded.

### (Preparation of Electrolyte Layer Paste)

The electrolyte layer paste was prepared by mixing commercially available yttrium stabilized zirconia 8YSZ (Y₂O₃: 8 mole % - ZrO₂: 92 mole %) powders with a particle diameter of about 0.5 µm, alpha-terpineol system solvent as a solvent and ethyl cellulose as a binder with the mixing ratio of 65 : 31 : 4 by weight and then the obtained mixture was sufficiently kneaded.

### (Preparation of Reaction Suppressing Layer Paste)

The reaction suppressing layer paste was prepared by mixing commercially available 10GDC (Gd₂O₃: 10mole% - CeO₂: 90 mole %) powders with a particle diameter of about 0.5 µm, alpha-terpineol as a solvent and ethyl cellulose as a binder with the mixing ratio of 65: 31: 4 by weight and sufficiently kneading.

### (Preparation of Cathode Layer Paste)

As the cathode material, a plurality of different kinds of cathode layer pastes which includes different composition raw material LSSC powders were prepared by the following method. A plurality of LSSC raw material powders which are within the predetermined range of mole composition ratio "x" (0 < "x" ≤ 0.36) of Sm, when the value "z" equal to 0.5 (z = 0.5) in the formula (1), [La_{z-x}SmxSr_{1-z}CoO₃]. In detail, the LSSC powders which have the same compositions with the compositions of the LSSC raw material powders which were used for forming the LSSC moldings of the example 3 (See Table 1). Respective LSSC powders having the predetermined mole composition ratio "x" were mixed with alpha-terpineol as a solvent and ethyl cellulose as a binder with the mixing ratio of 80 : 17 : 3 by weight and then the mixture was sufficiently kneaded to obtain plural kinds of cathode layer pastes.

### (Preparation of Coin Type Cell C (disk))

A plurality of coin type cells C (disk) as shown in Fig. 9 in which only the cathode material forming the cathode layer is different from each other was prepared by using the respective cathode layer pastes, each including different mole composition ratio LSSC powders and the pastes for other materials as explained above by the following method. By using the anode layer supporting precursor, the anode layer pastes were layered on a front surface of one side of the anode layer supporting precursor in a co-circular shape by screen-printing and drying thereafter. The electrolyte layer pastes were layered on the front surface of the anode layer supporting precursor with a diameter of about 30 mm and the thickness of about 10 µm in a co-circular shape by screen-printing and drying thereafter. Further, similarly, the reaction suppressing layer pastes were layered on the front surface of the electrolyte layer precursor with a diameter of about 15mm and the thickness thereof about 5 µm in a co-circular shape by screen-printing and drying thereafter. Then the layered cells were cut in a disk shape having the diameter of about 25 mm. The diameters of the anode layer support, the anode layer and the electrolyte layer were approximately the same except the diameter of the reaction suppressing layer which is smaller than the diameters of the others and then a layered precursor formed by layering coaxially the anode layer support, the anode layer, the electrolyte layer and the reaction suppressing layer.

Next, the above layered precursor formed by layering coaxially the anode layer support, the anode layer, the electrolyte layer and the reaction suppressing layer was burned with the temperature of about 1350°C for three hours. Thus, the circular shaped half-cell layered body formed by the anode layer support 12, the anode layer 11, the electrolyte layer 31 and the reaction suppressing layer 32 in this order.

Then, the cathode layer precursor with the diameter of about 10 mm was layered on the front surface of the reaction suppressing layer 32 of the half-cell layered body by screen-printing the cathode layer paste in a co-circular shape and then drying. Thus, the layered body precursor was formed, on which the half-cell layered body and the cathode layer were layered coaxially having a smaller diameter in this order.

Next, the above layered precursor formed by layering the half-cell layered body and the layered precursor body of the cathode layer was burned at the temperature of 1000°C for two hours. As shown in Fig. 9, the coin type cell C (disk) was formed by layering the anode layer support 12, the anode layer 11, the electrolyte layer 31 which diameters are approximately equal, the reaction suppressing layer 32 and the cathode layer 21 which diameters are smaller, in this order. Each of the layers was coaxially layered and a flat plate circular structure was formed with the thickness of the anode layer 11, the electrolyte layer 31, the reaction suppressing layer 32 and the cathode layer 21 in total being about 50 µm.

### (Comparison Example 4)

### (Preparation of Coin Type Cell C (disk))

A coin type cell C (disk) of the comparison example 3 which has the same shape with the example 4 by using the same manufacturing method as the example 4 was formed using the powders of LSC (La_{0.5}Sr_{0.5}CoO₃) wherein the mole composition ratio of La "z" is 0.5.

### (Evaluation of cell Voltage)

### (Electricity Generation Test)

The electricity generation test was conducted using the coin type cell C (disk) associated with the example 4 and the comparison example 4 under the test condition described as follows. The cell voltages of each coin type cell C (disk) were measured. The coin type cell C (disk) of the example 4 has approximately a circular flat disk plate type in overall shape. As shown in Fig. 9, the coin type cell C (disk) was formed by layering the anode layer support 12, the anode layer 11, the electrolyte layer 31 which diameters are approximately equal, the reaction suppressing layer 32 and the cathode layer 21 which diameters are smaller in this order. Each of the layers is coaxially layered in order towards the upper direction as viewed in the Figure and a co-axial circular structure is formed. By using a known electricity generation test device, an electrode body formed by a platinum made meshed member is brought into contact with an exposed portion of the anode layer support 12 at the environmental temperature of 700°C thereby collecting electrons at the anode electrode side and similarly, the electrode body is brought into contact with a surface of the cathode layer 21 thereby collecting electrons at the cathode electrode side. The hydrogen gas H₂ was used as the fuel gas and the air was used as the oxidizing gas. These gases were flown under the flow-rate of 200 (ml/min), respectively. Then the voltage between the electrodes at the predetermined current density of 0.2 (A/cm²) was measured.

### (Cell Voltage: Cylindrical Type Cell)

The voltage of the cylindrical type cell C (cyl) was presumed from the measured voltage of the coin type cell C (disk). In more detail, by using the transmitting line model (equivalent circuit) of the cylindrical cell (cyl), based on the measured voltage value of the coin type cell C (disk) obtained by the test, simulation was conducted for obtaining the output voltage of the cylindrical cell (cyl). By assuming that a presumed current collecting member (not shown) is attached to the cylindrical cell C (cyl), based on the value obtained from the simulation, a correction that reduces the voltage drop calculated value of the collecting loss of the presumed current collecting member was made to presume the voltage of the cylindrical cell C (cyl).
As shown in Fig. 10, the cylindrical cell C (cyl) is formed by layering the anode layer support 120, the anode layer 110, the electrolyte layer 310, the reaction suppressing layer 320 and the cathode layer 210 which correspond to the anode layer support 12, the anode layer 11, the electrolyte layer 31, the reaction suppressing layer 32 and the cathode layer 21 of the coin type cell (disk) in a radial direction from inside towards outside in this order.

The cylindrical type cell C (cyl) has an electrode length which has a predetermined length (for example, L = 50 mm) along in a longitudinal direction. The current collecting portion of the cylindrical type cell C (cyl) to be connected to an external circuit is positioned at one end portion and the other end portion along an axial direction of the anode layer 110 and the cathode layer 210. For simulation of this transmitting line model, known values were given for each property value of each material which forms each layer. Among such values, as the property value of electric conductivity of the cathode layer 210, the values actually measured by the respective LSSC moldings of the example 3 and as the property value of the electric conductivity of the presumed cathode current collecting member connected to the cathode layer 210, the value was calculated assuming that the porosity of the current collecting material is 30%, based on the values measured by the values actually measured by the respective LSSC moldings of the example 3.

In Fig. 8, the cell voltage of the cylindrical type cell C (cyl) is indicated. In other words, the relationship between the output voltage of the cylindrical type cells C (cyl) calculated based on the actually measured coin type cells (disk) associated with the example 4 and the comparison example 4 and the substitution ratio "x / z" of Sm of the LSSC is indicated as a graph.
From the graph of Fig. 8, it was confirmed that each presumed cylindrical type cell C (cyl) of the example 4 exhibits the cell voltage corresponding to the cylindrical type cell C (cyl) of the comparison example 4 at the temperature of 700°C, when the LSSC is included in the cathode material of the cathode layer 21 and at the same time, the LSSC is used as an electric conductivity material for the presumed current collecting member. The cylindrical type cell C (cyl) in which the substitution ratio "x / z" of Sm is within the range of 0 "x / z" < 0.72 can be highly appreciated due to the obtained cell voltage similar to the cell voltage of the comparison example 4. Particularly, since the cylindrical type cell C (cyl) using the LSSC in which the substitution ratio "x / z" of Sm is about the value of 0.08 could obtain a cell voltage higher than that of the cylindrical type cell C (cyl) of the comparison example 4, it was highly appreciated.

### (Total (Comprehensive) Evaluation of Cathode Material)

The evaluation results of the examples 3 and 4 in which the LSSC was used as the cathode material for the SOFC according to the second embodiment were listed in the Table 1 together with the results of the comparison examples for relative evaluation.

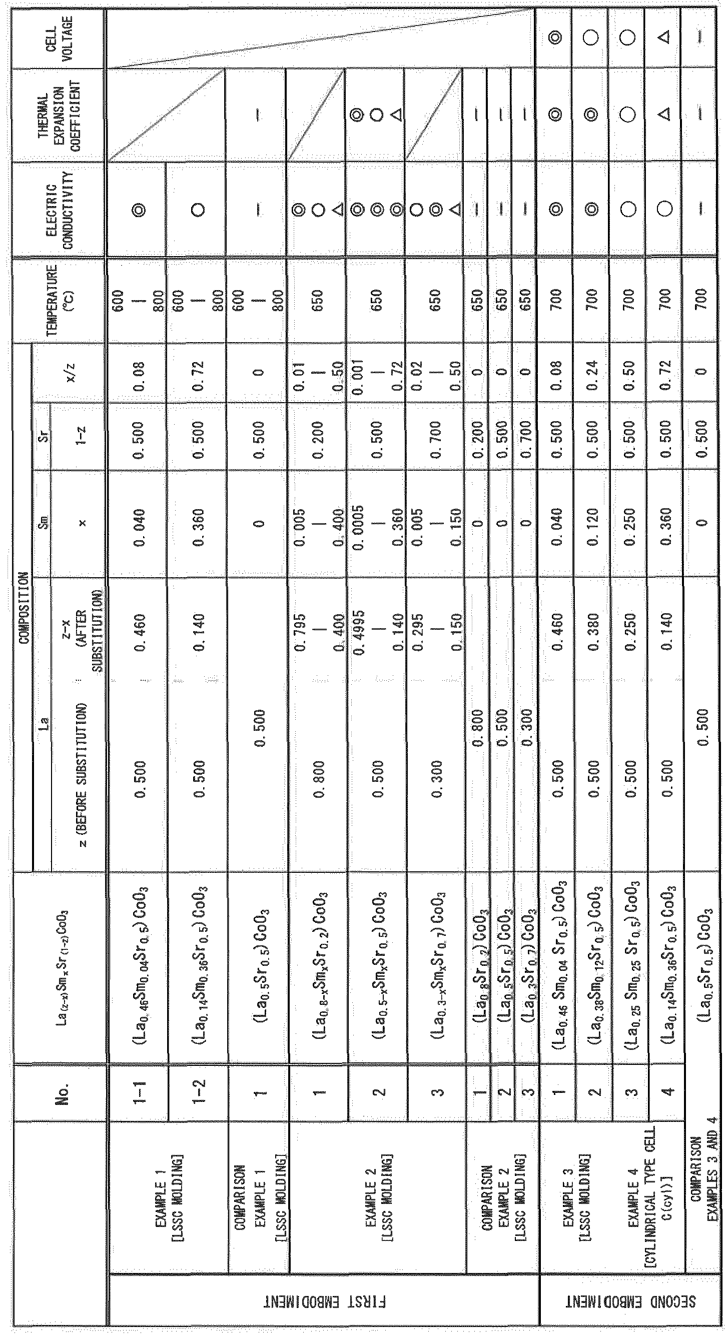

From the Table 1 and Figs. 6 through 8, it can be evaluated in general, as follows: It is preferable for the LSSC molding when the LSSC molding has the substitution ratio "x / z" of Sm that can be taken, relative to the perovskite type oxide is within the range of 0 < "x / z" < 0.72, since the electric conductivity is great and at the same time the thermal expansion coefficient approximates the optimum value and in addition, a cell voltage which competes with the LSC of the comparison examples can be obtained when the LSSC molding has the above composition. Further, it is particularly preferable for the LSSC molding when it has the substitution ratio of "x / z" being in the range of 0.08 ≤ x / z≤ 0.5. In this range of composition, the LSSC molding can surely attain the advantageous effect of the invention.

In order to evaluate the output performance of the SOFC cell, the inventors of this application have studied the cylindrical type cell C (cyl) by presuming the structure of the cylindrical cell in which a presumed cathode current collecting member is layered on the cathode layer 21 and both the cathode material and the electric conductivity material include the LSSC. It is however, the invention is not limited to the embodiments explained above and another example, such as for example, the SOFC cell in which at least the cathode material includes the LSSC can achieve the improvement of the electric conductivity. It is, however, since the SOFC cell is formed as a joint body of different kind ceramics systems or of different type, such as, metal - ceramics materials, a certain defect, such as for example, generation of undesired insulating reactive composition at the interface between the two different materials or a hindrance to an electrode reaction activity due to an acceleration of mutual spreading of the composed elements. Accordingly, it is preferable to form a cathode layer and a cathode current collecting layer or a current collecting body, connected to the cathode layer by the same material to suppress the generation of the above possible defects.

Generally, an LSC molding has a larger thermal expansion coefficient than those of general metallic materials and the ceramics system materials, however, regarding to the electric conductivity, the LSC molding has a remarkably large and superior electric conductivity. Under such situation, an improved cathode material which has both large electric conductivity and thermal expansion coefficient which is approximately the same value with another member to be connected thereto has been expected. According to the embodiments of the present invention, the present invention has been made to solve the above-described problems, and it is an object of the invention to provide a fuel cell equipped with a cathode layer which includes material having a high electric conductivity and a thermal expansion coefficient close to that of another material to be connected thereto under a high temperature operation condition.

As explained in detail above, the SOFC 100 (fuel cell) of the present invention, uses the perovskite type oxide explained in the embodiments or the examples of the present invention and includes an electrolyte layer 3, a cathode layer 2 provided at one side of the electrolyte layer 3, an anode layer 1 provided at the other side of the electrolyte layer 3 and a current collecting body E electrically connected to at least one of the cathode layer 2 or the anode layer 1 for collecting electrons which perform an electrode reaction or taking out electricity to an exterior of a unit cell C or the SOFC 100, wherein a current collecting member 52 forming the current collecting body E has a perovskite type oxide structure which includes a perovskite type oxide represented as a general chemical formula "ABO₃" as an electric conductivity material wherein La and Sr are arranged at A-sites of the perovskite type oxide and Co is arranged at B-sites of the perovskite type oxide and wherein a portion of the La of the A-sites is substituted with Sm and a mole composition ratio of the Sm relative to the perovskite type oxide is smaller than the mole composition ratio of the La before substitution relative to the perovskite type oxide.

By exhibiting the electric conductivity of the electric conductivity material larger than a conventional material of (La,Sr)CoO₃, the electric voltage loss due to an electric resistance of the current collecting member 52 can be reduced and the output performance of the SOFC 100 can be improved. Generally, the SOFC 100 generates electricity under a state that a plurality of unit cells C has layered one another and each of the unit cells C is electrically connected through the current collecting body E and accordingly, the electric resistance becomes reduced to improve the output performance of the fuel cell. In addition, the thermal expansion coefficient of the (La,Sm,Sr)CoO₃ becomes reduced to be close to those of the other members such as metallic materials and ceramics system materials. In other words, since the thermal expansion coefficient of the LaSmSrCoO₃ is smaller than the (La,Sr)CoO₃, it can suppress peeling-off phenomenon between the current collecting member 52 and the separator layer 51 which has a metallic material as the main composition due to the difference in thermal expansion coefficient between the ceramics system material and the metallic material under a high temperature operation environment. Thus, the contact resistance can be reduced to improve the output performance of the fuel cell.

Thus, in addition to the effect of the first embodiment, the electric conductivity of the cathode material becomes large compared to the (La,Sr)CoO₃ of the conventional material. Similar to the (La,Sr)CoO₃, the (La,Sm,Sr)CoO₃ has the function of oxygen activation catalyst, oxygen ion conductivity and electro-conductivity. Further, since the thermal expansion coefficient of the (La,Sm,Sr)CoO₃ is smaller than the the (La,Sr)CoO₃, it can suppress peeling-off phenomenon between the current collecting member 52 and the separator layer 51 which has a metallic material as the main composition due to the difference in thermal expansion coefficient between the ceramics system material and the metallic material under a high temperature (operation environment). The thermal expansion coefficient of the conventional (La,Sr)CoO₃ is relatively large compared to the metallic materials or ceramics system materials which are used generally for the SOFC and accordingly, it has been difficult to adjust the thermal expansion coefficient. In such a situation, the effect that the thermal expansion coefficient of the (La,Sm,Sr)CoO₃ can be reduced, while effectively utilizing the electric conductivity thereof is remarkable. Thus, the contact resistance can be reduced to improve the output performance of the fuel cell. It is noted here that a preferable composition of the (La,Sr)CoO₃ in which the substitution ratio "x / z" of Sm being in a preferable range is used as the parameter as a cathode material has been introduced by the embodiments of the invention, however, as another parameter, for judging the preference, the mole composition ratio "x" of Sm may be used to be a preferable composition of the (La,Sr)CoO₃ molding.

Further, the cylindrical type cell C (cyl) equipped with a presumed current collecting member and a cathode layer 210 which include (La,Sm,Sr)CoO₃ as the conductivity material and the cathode material can more improve the output performance of the fuel cell than the presumed current collecting member and the cathode layer 210 which include conventional (La,Sr)CoO₃ as the conductivity material and the cathode material can more improve the output performance of the fuel cell. Further, the cylindrical type cell C (cyl) equipped with a presumed current collecting member and a cathode layer 210 which include (La,Sm,Sr)CoO₃ as the conductivity material and the cathode material has the cathode layer and the (presumed) current collecting member which is connected to the cathode layer formed by the same material and accordingly, a deterioration of the output performance of the SOFC cell can be suppressed by suppressing hindrance to an electrode reaction activity as explained above.

Further, since the thermal expansion coefficient of the (La,Sm,Sr)CoO₃ is smaller than the (La,Sr)CoO₃, a chipping which may be generated due to a difference in thermal expansion coefficient between the (La,Sm,Sr)CoO₃ and other cell components, such as separator layer 51, cathode layer 2 and anode layer 1 can be suppressed thereby to improve the reliability.

### [Description of Reference Numerals and Signs]

1, 11, 110: anode layer, 2, 21, 210: cathode layer, 3, 31, 310: electrolyte layer, 51: separator layer, 52: current collecting member, 100: SOFC (Solid-Oxide Fuel Cell), C: unit cell C (disk): Coin type cell (unit cell), C(cyl): Cylindrical type cell (unit cell), E: current collecting body.

## Claims

1. A fuel cell comprising:
an electrolyte layer (3);
a cathode layer (2) provided at one side of the electrolyte layer;
an anode layer (1) provided at the other side of the electrolyte layer; and
a current collecting member (52) electrically connected to at least one of the cathode layer and the anode layer for collecting an electron or taking out an electricity to an exterior of the fuel cell, wherein
at least one of the current collecting member and the cathode layer includes a perovskite type oxide which is represented by a general formula "ABO₃" as a material thereof
in which "A"-sites are occupied by "La" and "Sr" and "B"-sites are occupied by "Co" and
a portion of "La" is substituted with "Sm" to be represented as "(La,Sm,Sr)CoO₃" and wherein a mole composition ratio of "Sm" relative to the perovskite type oxide is smaller than a mole composition ratio of "La" before substitution relative to the perovskite type oxide, wherein
the perovskite type oxide is represented by a formula (1) as:
La_{z-x}SmₓSr_{1-z}CoO₃ .... (1)
wherein "z" represents the mole composition ratio of "La" before substitution relative to the perovskite type oxide and "x" represents the mole composition ratio of "Sm" relative to the perovskite type oxide; and wherein
(i) in a case where the current collecting member includes the perovskite type oxide as the material thereof, the mole composition ratio "x" of "Sm" relative to the perovskite type oxide relative to the mole composition ratio "z" of "La" before substitution relative to the perovskite type oxide is within a range of 0.01 ≤ "x / z" < 0.5 and a mole composition ratio of "Sr" relative to the perovskite type oxide represented as "1 - z" is within a range of 0.2 ≤ "1 - z" ≤ 0.7;
(ii) in a case where the cathode layer includes the perovskite type oxide as the material thereof, the relationship of values "x" and "z" is 0 < "x/z" < 0.72 and "z" = 0.5 in the formula (1).

2. The fuel cell according to claim 1, wherein
(i) the current collecting member includes the perovskite type oxide as the material thereof, and
the mole composition ratio "x" of "Sm" relative to the perovskite type oxide relative to the mole composition ratio "z" of "La" before substitution relative to the perovskite type oxide is within a range of 0.01 ≤ "x / z" ≤ 0.25.

## Patentansprüche

1. Brennstoffzelle umfassend:
eine Elektrolytschicht (3);
eine an einer Seite der Elektrolytschicht bereitgestellte Kathodenschicht (2);
eine an der anderen Seite der Elektrolytschicht bereitgestellte Anodenschicht (1);
und
ein Stromabnehmerelement (52) elektrisch verbunden mit zumindest einer der Kathodenschicht und der Anodenschicht zum Abnehmen eines Elektrons oder Entnehmen einer Elektrizität an ein Äußeres der Brennstoffzelle, wobei
zumindest eins des Stromabnehmerelements und der Kathodenschicht ein Perowskit-Typ-Oxid beinhaltet, welches durch eine allgemeine Formel "ABO₃" als ein Material davon dargestellt ist
in welchem "A"-Seiten mit "La" und "Sr" besetzt sind und "B"-Seiten mit "Co" besetzt sind und
einem Anteil von "La" substituiert ist mit "Sm", um als als "(La,Sm,Sr)CoO₃" dargestellt zu werden und wobei ein Molzusammensetzungsverhältnis von "Sm" relativ zu dem Perowskit-Typ-Oxid kleiner ist als ein Molzusammensetzungsverhältnis von "La" vor Substitution relativ zu dem Perowskit-Typ-Oxid, wobei
das Perowskit-Typ-Oxid durch eine Formel (1) dargestellt ist als:
La_{z-x}SmₓSr_{1-z}CoO₃ .... (1)
wobei "z" das Molzusammensetzungsverhältnis von "La" vor Substitution relativ zu dem Perowskit-Typ-Oxid darstellt und "x" das Molzusammensetzungsverhältnis von "Sm" relativ zu dem Perowskit-Typ-Oxid darstellt; und
wobei
(i) in einem Fall, wo das Stromabnehmerelement das Perowskit-Typ-Oxid als das Material davon beinhaltet, das Molzusammensetzungsverhältnis "x" von "Sm" relativ zu dem Perowskit-Typ-Oxid relativ zu dem Molzusammensetzungsverhältnis "z" von "La" vor Substitution relativ zu dem Perowskit-Typ-Oxid innerhalb eines Bereiches von 0,01 ≤ "x / z" < 0,5 ist und ein Molzusammensetzungsverhältnis von "Sr" relativ zu dem Perowskit-Typ-Oxid dargestellt als "1 - z" innerhalb eines Bereichs von 0,2 ≤ "1 - z" ≤ 0,7 ist;
(ii) in einem Fall, wo die Kathodenschicht das Perowskit-Typ-Oxid als das Material davon beinhaltet, die Beziehung von Werten "x" und "z" 0 < "x/Z" < 0,7 und "z" = 0,5 in der Formel (1) ist.

2. Brennstoffzelle nach Anspruch 1, wobei
(i) das Stromabnehmerelement das Perowskit-Typ-Oxid als Material davon beinhaltet, und
das Molzusammensetzungsverhältnis "x" von "Sm" relativ zu dem Perowskit-Typ-Oxid relativ zu dem Molzusammensetzungsverhältnis "z" von "La" vor Substitution relativ zu dem Perowskit-Typ-Oxid innerhalb eines Bereichs von 0,01 ≤ "x / z" ≤ 0,25 ist.

## Revendications

1. Pile à combustible comprenant :
une couche d'électrolyte (3) ;
une couche de cathode (2) disposée sur un côté de la couche d'électrolyte ;
une couche d'anode (1) disposée sur l'autre côté de la couche d'électrolyte ; et
un élément de collecte de courant (52) connecté électriquement à au moins l'une parmi la couche de cathode et la couche d'anode pour collecter un électron ou pour extraire de l'électricité vers l'extérieur de la pile à combustible, dans laquelle
au moins l'un parmi l'élément de collecte de courant et la couche de cathode contient un oxyde de type perovskite qui est représenté par la formule générale "ABO₃" en tant que matériau de celui-ci,
dans laquelle des sites "A" sont occupés par "La" et "Sr" et des sites "B" sont occupés par "Co", et
une partie du "La" est remplacée par "Sm" de manière à être représentée par "(La,Sm,Sr)CoO₃", et dans laquelle la proportion de composition molaire du "Sm" par rapport à l'oxyde de type perovskite est inférieure à la proportion de composition molaire du "La" avant remplacement par rapport à l'oxyde de type perovskite,
dans laquelle l'oxyde de type perovskite est représenté par la formule (1) comme suit :
La_{z-x}SmₓSr_{1-z}CoO₃ ... (1)
dans laquelle "z" représente la proportion de composition molaire du "La" avant remplacement par rapport à l'oxyde de type perovskite et "x" représente la proportion de composition molaire du "Sm" par rapport à l'oxyde de type perovskite ; et dans laquelle
(i) dans le cas où l'élément collecteur de courant contient l'oxyde de type perovskite en tant que matériau de celui-ci, le rapport entre la proportion de composition molaire "x" du "Sm" par rapport à l'oxyde de type perovskite, et la proportion de composition molaire "z" du "La" avant substitution par rapport à l'oxyde de type perovskite, est situé dans la plage 0,01 ≤ "x"/"z" < 0,5, et la proportion de composition molaire "Sr" par rapport à l'oxyde de type perovskite, représentée par "1-z", est située dans la plage 0,2 ≤ "1-z" ≤ 0,7 ;
(ii) dans le cas où la couche de cathode contient l'oxyde de type perovskite en tant que matériau de celle-ci, la relation entre les valeurs "x" et "z" est 0 < "x"/"z" < 0,72, et "z" = 0,5 dans la formule (1).

2. Pile à combustible selon la revendication 1, dans laquelle
(i) l'élément collecteur de courant contient l'oxyde de type perovskite en tant que matériau de celui-ci, et
le rapport entre la proportion de composition molaire "x" du "Sm" par rapport à l'oxyde de type perovskite, et la proportion de composition molaire "z" du "La" avant substitution par rapport à l'oxyde de type perovskite, est situé dans la plage 0,01 ≤ "x"/"z" ≤ 0,25.
